# EUROPÄISCHE PATENTSCHRIFT

(11) **EP 1 512 610 B1**
(45) Veröffentlichungstag und Bekanntmachung des Hinweises auf die Patenterteilung: **12.12.2007**
(21) Anmeldenummer: 03103299.8
(22) Anmeldetag: 05.09.2003
(51) Int. Cl.: B62D 7/18, B60G 7/00, B60G 13/00

(54) **Schwenklager für ein Fahrzeug**
Swivel bearing for a vehicle
Palier pivotant pour véhicule

(43) Veröffentlichungstag der Anmeldung: 09.03.2005
(73) Patentinhaber: Ford Global Technologies, LLC, A subsidary of Ford Motor Company, Dearborn, MI 48126 (US)
(72) Erfinder: Hallfeldt, Torsten, 52249, Eschweiler (DE); David, Wolfgang, 52074, Aachen (DE); Frantzen, Michael Johannes, 52076, Aachen (DE); Porschen, Peter, 50170, Kerpen (DE); Simon, Marc, 50735 Köln (DE)
(74) Vertreter: Drömer, Hans-Carsten

(56) Entgegenhaltungen:
- EP-A- 0 473 876
- DE-A- 19 931 018
- US-A- 4 582 338
- US-A- 4 618 159

## Beschreibung

Die Erfindung betrifft ein Schwenklager für ein Fahrzeug mit einem Grundkörper zur Verbindung von Radführungselementen mit einem Fahrzeugrad. Ein gattungsgemäßer Schwenklager ist aus der US 5 582 388 A bekannt.

In der US 4,454,601 ist ein unabhängiges Radaufhängungssystem für die lenkbaren Räder eines Fahrzeugs in einer Ausführung offenbart, bei der eine teleskopartig nachgebende Strebeneinheit zwischen dem Rad und einem Abschnitt der Fahrzeugkarosserie an jedem Rad angeordnet ist. Ein Schlepparmelement ist schwenkbar am Rad und an der Strebeneinheit montiert sowie ebenfalls schwenkbar am Fahrzeugchassis vor dem Rad angebracht. Die Strebeneinheit weist einen teleskopartigen Abschnitt und einen Trägerabschnitt auf. Der Trägerabschnitt besteht aus einem Strebenträgerpreßteil, das fest mit dem teleskopartigen Abschnitt verbunden ist, und aus einem Achsschenkelträgerpreßteil, das an dem Strebenträgerpreßteil befestigt ist, so daß eine Einheit gebildet ist. Das Strebenträgerpreßteil hat integral geformte Abschnitte, um so eine schwenkbare Verbindung mit dem Schlepparmelement zu schaffen.

Die US 5,145,204 betrifft ein unabhängiges Aufhängungssystem für ein Heckrad eines Fahrzeugs. Eine leichte Gelenkklammer ist aus einem Paar vorderen und hinteren spiegelbildlich hergestellten Bauteilen aus einem Blech gepreßt. Die beiden Bauteile sind miteinander verschweißt. Jedes Bauteil ist mit einem halbkreisförmigen Hülsenabschnitt ausgebildet, der zwischen äußeren und inneren ebenen Abschnitten angeordnet ist.

Die JP 60092908 A betrifft eine McPherson artige Federbeinaufhängung. Hierbei wird ein Schwenklager zur Aufnahme des zylindrischen Dämpfers aus einem Metallblech u-förmig gebogen. In oberen und unteren Blechteilen des Schwenklagers sind Löcher vorgesehen, so daß ein zylindrischer Teil des Dämpfers diese durchgreift. Die oberen und unteren Blechteile werden mit dem zylindrischen Teil des Dämpfers verschweißt.

In der DE 199 15 633 A1 ist ein Schwenklager für insbesondere die Vorderachse eines frontgetriebenen Kraftfahrzeugs mit einem Grundkörper aus miteinander verbindbaren Blechformteilen offenbart. An den Blechformteilen sind Bauteile für die Radaufhängung und Radführung sowie Radbremsung befestigt. Die Blechformteile und die Bauteile sind aus einem Titanlegierungswerkstoff hergestellt. Die Blechformteile sind mittels eines Tiefziehvorgangs hergestellt, so daß diese als zwei komplementär ausgebildete Blechformteile vorliegen, die über eine Schweißverbindung aneinander gefügt einen Hohlkörper mit mehreren Anbindungsflächen für die Aufnahme der Bauteile bilden.

Die DE 195 33 315 C1 betrifft einen Achsschenkel insbesondere für die Vorderachse eines frontgetriebenen Kraftfahrzeugs mit einem Grundkörper, der aus miteinander verbindbaren Blechformteilen gebildet ist, die im verbundenen Zustand einen umlaufenden Hohlraum umschließen. Der Hohlraum ist zur Aufnahme entsprechend angepaßter und den Achsschenkel versteifender Abschnitte von Bauteilen vorbereitet, die zur Befestigung von Radaufhängungs- oder Lenkungselementen oder einer Bremse am Achsschenkel dienen.

Schwenklager an Fahrzeugen werden benutzt um das Fahrzeugrad mit den Radführungselementen zu Verbinden. Radführungselemente können beispielhaft Dämpfer, Bremsen, Lenkhebel und Querlenker sein. Schwenklager können aber auch Radlager tragen. Wegen der vielfältigen Funktion und aus Sicherheitsgründen sind die Schwenklager oft aus relativ schwerem und teurem Stahlguß hergestellt. Einige Schwenklager werden aus Blechen tiefgezogen, wobei die Einzeltzeile zu einer Einheit miteinander verbunden, hauptsächlich verschweißt werden. Andere Schwenklager werden aber auch mittels superplastischer oder thixotropischer Formgebung hergestellt.

Der Erfindung liegt die Aufgabe zugrunde ein verbessertes Schwenklager zur Verfügung zu stellen, das unter Beachtung der Sicherheit sowie der vielfältigen Funktionen im Gewicht reduziert eine erhöhte Steifigkeit aufweist und zudem äußerst preiswert herstellbar ist.

Erfindungsgemäß wird dies dadurch erreicht, daß der Grundkörper aus einem ebenen Blech besteht, dem eine Flanschplatte zugeordnet ist, die mit dem Grundkörper kraftformschlüssig verbunden ist.

Um die Herstellungskosten möglichst gering zu halten, ist es zweckmäßig, wenn der Grundkörper aus einem ebenen Halbzeug hergestellt ist. Vorzugsweise ist der Grundkörper aus einem ebenen, ungeformten Blech einstückig hergestellt. Günstig im Sinne der Erfindung ist, wenn der Grundkörper aus dem ebenen Blech gestanzt wird. Möglich ist aber jede andere Trennungsart, z. B. Laserschneiden.

Zur Versteifung sind dem Grundkörper eine oder mehrere Flanschplatten zugeordnet. Zur Erhöhung der Versteifung weist die Flanschplatte vorteilhaft einen Fortsatz auf. Die Flanschplatte ist mit dem Fortsatz ebenfalls einstückig aus einem ebenen Blech hergestellt, vorzugsweise aus diesem ausgestanzt ist. Aber auch Laserschneiden ist möglich. Ist eine Radlager mit Flanschplatte vorgesehen, so kann auch die Flanschplatte des Lagers benutzt werden.

Zur weiteren Versteifung weist der Grundkörper vorteilhaft Versteifungsrippen auf. Die Versteifungsrippen können als Versteifungsstäbe oder als Einbördelungen oder Sicken ausgestaltet sein. Bei dicken Blechen werden zur Versteifung bevorzugt separate Versteifungsstäbe verwendet, wobei in dünnen Blechen Einbördelungen als Erhebungen oder Vertiefungen eingeformt werden. Das Einbringen von Ziehsicken ist ebenfalls denkbar.

Weitere vorteilhafte Ausführungen der Erfindung sind in den Unteransprüchen und in der folgenden Figurenbeschreibung offenbart. Es zeigen:
- Fig. 1: eine perspektivische Ansicht eines Schwenklagers
- Fig. 2: eine weitere perspektivische Ansicht des Schwenklagers von einer zur Figur 1 gegenüberliegenden Seite,
- Fig. 3: eine perspektivische Seitenansicht des Schwenklagers,
- Fig. 4: eine weitere perspektivische Ansicht des Schwenklagers.

In den einzelnen Figuren sind gleiche Teile stets mit den selben Bezugszeichen versehen, weswegen sie in der Regel auch nur einmal beschrieben werden.

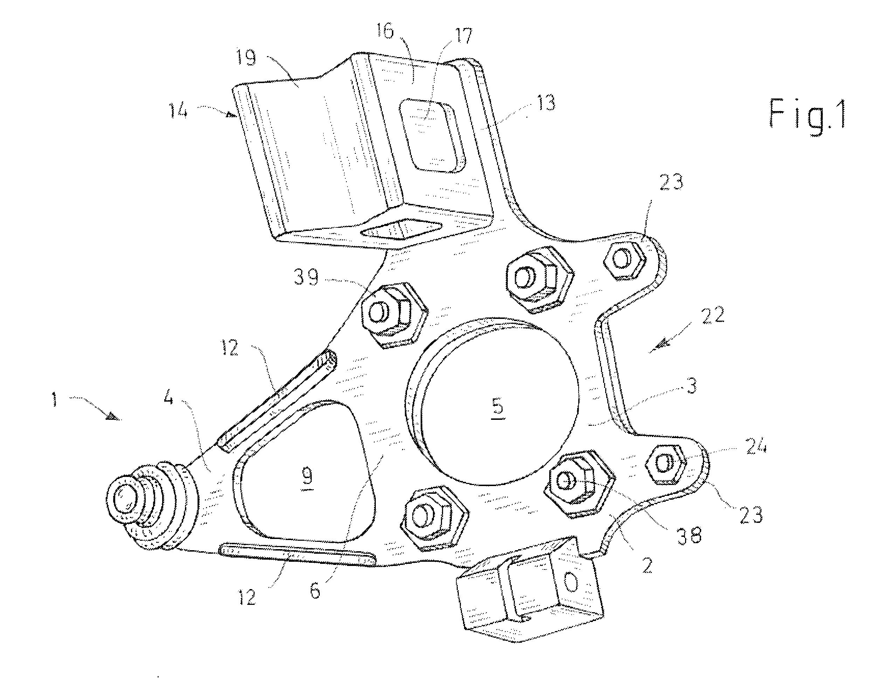

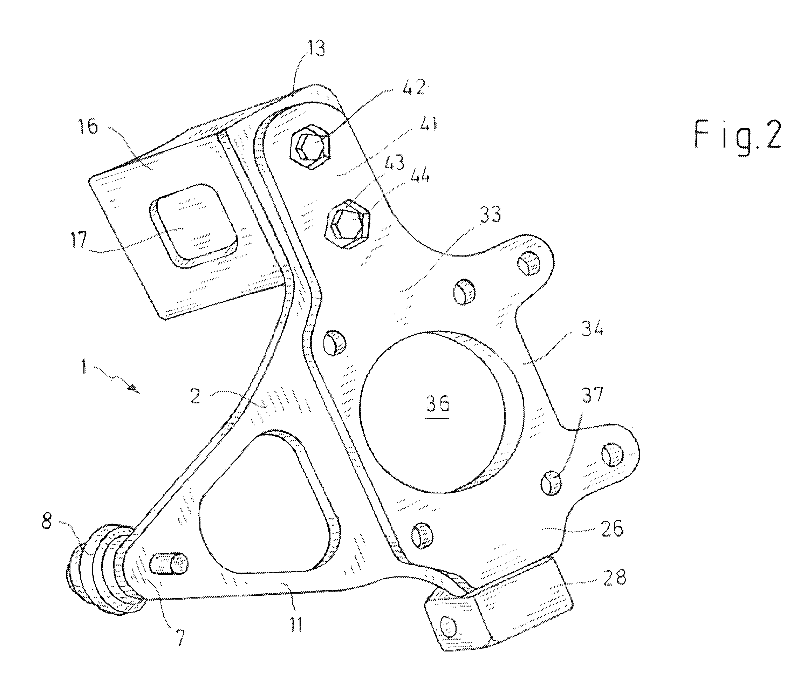

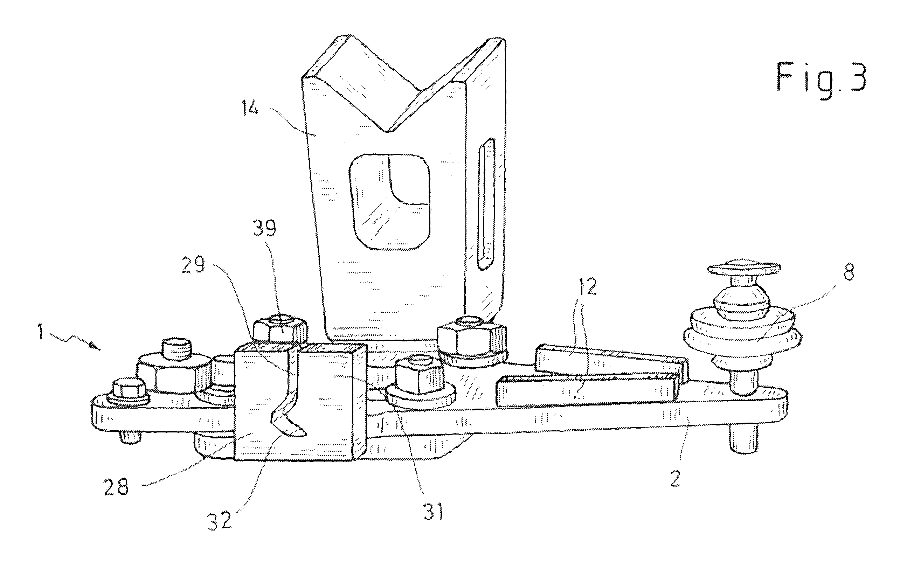

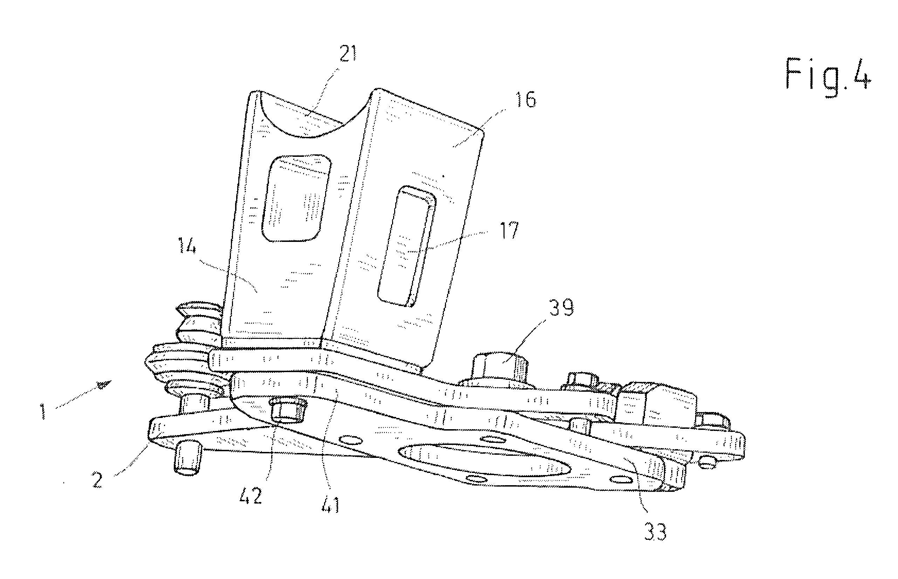

Figur 1 zeigt ein Schwenklager 1 mit einem Grundkörper 2 zur Verbindung von Radführungselementen mit einem Rad. Das Schwenklager 1, das jeweils in den Figuren 1 und 4 sowie in den Figuren 2 und 3 dargestellt ist, ist jeweils an einer Achse gegenüberliegend angeordneten Rädern zugeordnet. Der Grundkörper 2 weist eine im wesentlichen quadratische Grundfläche 3 auf, an der Befestigungsabschnitte zur Befestigung von Elementen zur Aufnahme der Radführungselemente wie z. B. Dämpfer, Bremsen, Lenkhebel und Querlenker vorgesehen sind. Eine Öffnung 5 ist etwa zentral in der Grundfläche 3 angeordnet, die von Durchstecköffnungen umgeben ist. Die Durchstecköffnungen dienen zur Aufnahme von Schrauben was weiter unten näher erläutert wird. Der Grundkörper 2 ist mit seinen Befestigungsabschnitten einstückig aus einem Blech hergestellt. Vorzugsweise wird der Grundkörper 2 aus dem Blech gestanzt, kann aber auch beispielhaft mittels Laserstrahl ausgeschnitten werden.

Ein erster Befestigungsabschnitt 4 ist im wesentlichen dreieckig ausgestaltet, und dient z.b. zur Befestigung des Lenkhebels. Der erste Befestigungsabschnitt 4 ist mit seiner Basisseite 6 an der Grundfläche 3 angeordnet, wobei eine verrundete Spitze 7 von der Grundfläche 3 in einer Ebene liegend weg gerichtet ist (Fig.2). In der Spitze 7 ist eine Bohrung zur Verbindung mit einem Lenkhebelkugelgelenk 8 eingebracht. In dem ersten Befestigungsabschnitt 4 ist eine Ausnehmung 9 angeordnet, so daß Stege 11 von der Basisseite 6 zur Spitze 7 führen (Fig.2).

Zur Versteifung des Grundkörpers 2 sind an den Stegen 11 Versteifungsrippen angeordnet, die in dem dargestellten Ausführungsbeispiel als Vierkantstäbe 12 mit den Stegen 11 stoffschlüssig verbunden sind (Figuren 1 und 3). Möglich ist aber auch, daß in den Stegen 11 Einbördelungen zur Versteifung eingebracht sind.

Ein zweiter Befestigungsabschnitt 13 ist im wesentlichen rechteckig ausgebildet, und dient z.B. zur Befestigung des Dämpfers. Der Dämpfer wird mittels einem Dämpferanschlußstück 14 mit dem zweiten Befestigungsabschnitt 13 des Grundkörpers 1 verbunden. Das Dämpferanschlußstück 14 besteht beispielhaft aus Stahl oder Aluminium und ist hohlkastenförmig ausgestaltet, wobei zur Gewichtsreduzierung in seinen Wänden 16 Ausnehmungen 17 angeordnet sind. Mit einer Befestigungsseite ist das Dämpferanschlußstück 14 komplementär zum zweiten Befestigungsabschnitt 13 ausgestaltet. Die Befestigungsseite ist etwas kleiner als der zweite Befestigungsabschnitt 13. Das Dämpferanschlußstück 14 wird mit dem zweiten Befestigungsabschnitt 13 kraftformschlüssig verbunden, was weiter unten näher beschrieben wird. An einer zur Befestigungsseite gegenüberliegenden Aufnahmeseite 19 weist das Dämpferanschlußstück 14 eine vorzugsweise halbkreisförmige Vertiefung 21 auf (Figuren 1 und 4). Die Vertiefung 21 kann aber auch andere geometrische Ausformungen aufweisen, die dem Dämpfer hinreichend Halt bieten. In der Vertiefung 21 wird eine Dämpferstrebe aufgenommen, die mit dem Dämpferanschlußstück 14 in herkömmlicher Weise verbunden, z.b. verschweißt wird.

Ein dritter Befestigungsabschnitt 22 ist gegenüberliegend zum ersten Befestigungsabschnitt 4 angeordnet. Der dritte Befestigungsabschnitt 22 besteht aus zwei Ohren 23, die voneinander beabstandet sind. In den Ohren 23 ist jeweils eine Bohrung angeordnet, durch welche Schrauben 24 führbar sind. Die Ohren 23 dienen mit den Schrauben 24 zur Befestigung der Bremsen.

Gegenüberliegend zum zweiten Befestigungsabschnitt 13 ist ein vierter Befestigungsabschnitt 26 angeordnet. Dieser ist als Fortsatz ausgestaltet. Mit dem Fortsatz ist ein Anschlußstück 28 zur Verbindung mit dem Querlenker vorzugsweise verschweißt. Das Anschlußstück 28 weist einen Spalt 29 auf, der hakenähnlich ausgestaltet ist, so daß eine Art Kulissenführung gebildet ist (Fig.3). Somit weist das Anschlußstück 28 zwei Klemmbacken 31 auf. In den Klemmbacken 31 ist zum einen eine Durchgangsöffnung und zum anderen ein Gewindeloch eingebracht. In den Spalt 29 wird ein Kugelgelenk des Querlenkers entlang der Kulissenführung bis zu deren Ende 32 geführt. Zur sicheren Befestigung des Querlenkers werden die beiden Klemmbacken 31 mittels einer Schraube zusammengeschraubt, indem die Schraube durch die Durchgangsöffnung gesteckt und in dem Gewindeloch eingeschraubt wird. Alternativ kann das Anschlußstück 28 auch eine Kegelbohrung zur Aufnahme eines entsprechenden Gegenstückes eines Querlenkers aufweisen.

Mit dem Grundkörper 2 ist eine Flanschplatte 33 kraftformschlüssig verbunden (Figur 2). Die Flanschplatte 33 weist eine im wesentlichen quadratische Basisfläche 34 mit einer mittigen Öffnung 36 zur herkömmlichen Befestigung eines Radlagers auf. Die Basisfläche 34 ist im wesentlichen gleich zur Grundfläche 3 des Grundkörpers 2 ausgestaltet, kann aber auch etwas größer oder kleiner sein. Um die Öffnung 36 herum sind Bohrungen 37 angeordnet. Die Bohrungen 37 sind in dem dargestellten Ausführungsbeispiel abschnittsweise einem Sechskantschraubenkopf entsprechend sechskantig ausgestaltet, so daß der Sechskantschraubenkopf in den jeweiligen Bohrungen 37 im wesentlichen spielfrei aufgenommen wird. In einem sich an sechskantigen Abschnitt anschließenden Abschnitt weisen die Bohrungen 37 einen einem Schraubenschaft angepaßten Durchmesser auf. Der sechskantige Abschnitt ist derart tief in die Flanschplatte 33 eingebracht, daß der Schraubenkopf von der Bohrung vollständig aufgenommen wird. Zur Verbindung der Flanschplatte 33 mit dem Grundkörper 2 werden die Bohrungen 37 deckungsgleich an den Durchstecköffnungen in dem Grundkörper 2 angelegt. Mittels einer Schraube 38, die jeweils in den deckungsgleichen Bohrungen 37 bzw. Durchstecköffnungen eingeführt ist, wird die Flanschplatte 33 mit dem Grundkörper 2 verschraubt, wobei eine Mutter 39 verwendet wird (Fig. 1). Selbstverständlich kann die Mutter 39 auch in der Bohrung 37 angeordnet sein. Die Öffnung 5 des Grundkörpers 2 ist hierbei deckungsgleich zur Öffnung 36 der Flanschplatte 33.

An der Basisfläche 34 ist ein Fortsatz 41 angeordnet. Der Fortsatz 41 ist derart an der Basisfläche 34 angeordnet, daß dieser mit dem zweiten Befestigungsabschnitt 13 auf der zum Dämpferanschlußstück 14 gegenüberliegenden Seite verbunden werden kann. Der Fortsatz 41 ist etwas kleiner ausgestaltet als der zweite Befestigungsabschnitt 13 und weist zum einen eine Bohrung auf, durch die eine Schraube 42 zur Befestigung der Flanschplatte 33 an dem zweiten Befestigungsabschnitt 13 geführt wird. Die Schraube 42 wird in ein Gewindeloch in dem zweiten Befestigungsabschnitt 13 eingeschraubt. Zum anderen weist der Fortsatz 41 eine zur Bohrung 37 ähnlich ausgestaltete Bohrung 43 auf. In der Bohrung 43 ist eine Schraube 44 mit ihrem Schraubenkopf aufgenommen. Mit ihrem Schaft durchgreift die Schraube 44 den zweiten Befestigungsabschnitt 13 und ist in ein Gewindeloch der Befestigungsseite des Dämpferanschlußstücks 14 eingeschraubt, wodurch auch eine Kraftformschlüssige Verbindung der Flanschplatte 33 mit dem Grundkörper 2 erreicht wird.

Die Flanschplatte 33 besitzt eine Doppelfunktion. Zum einen nimmt diese das Radlager auf. Zum anderen versteift die Flanschplatte 33 den Grundkörper 2. Die Flanschplatte 33 ist mit ihrem Fortsatz 41 einstückig aus einem ebenen Blech gestanzt, kann aber auch in anderer Art und Weise aus dem Blech herausgetrennt werden, z.b. mittels Laser.

Somit wird ein verbessertes Schwenklager 1 zur Verfügung gestellt, das unter Beachtung der Sicherheit sowie der vielfältigen Funktionen bei reduziertem Gewicht eine erhöhte Steifigkeit aufweist und zudem äußerst preiswert herstellbar ist.

## Patentansprüche

1. Schwenklager für ein Fahrzeug mit einem Grundkörper (2) zur Verbindung von Radführungselementen mit einem Rad,
**dadurch gekennzeichnet, daß**
der Grundkörper (2) aus einem ebenen Blech besteht, dem eine Flanschplatte (33) zugeordnet ist, die mit dem Grundkörper (2) kraftformschlüssig verbunden ist.

2. Schwenklager nach Anspruch 1,
**dadurch gekennzeichnet, daß**
der Grundkörper (2) Befestigungsabschnitte (4,13,22,26) zur Befestigung von Radführungselementen aufweist.

3. Schwenklager nach Anspruch 1 oder 2,
**dadurch gekennzeichnet, daß**
der Grundkörper (2) mit seinen Befestigungsabschnitten (4,13,22,26) einstückig hergestellt ist.

4. Schwenklager nach einem der vorhergehenden Ansprüche,
**dadurch gekennzeichnet, daß**
der Grundkörper (2) aus dem ebenen Blech gestanzt ist.

5. Schwenklager nach einem der vorhergehenden Ansprüche,
**dadurch gekennzeichnet, daß**
die Flanschplatte (33) einen Fortsatz (41) aufweist, der an einen zweiten Befestigungsabschnitt (13) des Grundkörpers (2) angepaßt ausgestaltet ist

6. Schwenklager nach einem der vorhergehenden Ansprüche,
**dadurch gekennzeichnet, daß**
die Flanschplatte (33) Bohrungen (37) aufweist, die zumindest abschnittsweise sechskantig ausgestaltet sind

7. Schwenklager nach Anspruch 5 oder 6,
**dadurch gekennzeichnet, daß**
die Flanschplatte (33) mit ihrem Fortsatz (41) zum einen mit dem Grundkörper (2) und zum anderen mit einem Dämpferanschlußstück (14) kraftformschlüssig verbunden ist.

8. Schwenklager nach einem der vorhergehenden Ansprüche,
**dadurch gekennzeichnet, daß**
der Grundkörper (2) Versteifungsrippen aufweist.

9. Schwenklager nach einem der vorhergehenden Ansprüche,
**dadurch gekennzeichnet, daß**
die kraftformschlüssige Verbindung eine Schraubverbindung ist.

## Claims

1. Pivot bearing for a vehicle having a base body (2) for connecting wheel guiding elements to a wheel, **characterized in that** the base body (2) is composed of a planar piece of sheet metal to which a flange plate (33), which is connected to the base body (2) in a frictionally locking fashion, is assigned.

2. Pivot bearing according to Claim 1, **characterized in that** the base body (2) has attachment sections (4, 13, 22, 26) for attaching wheel guiding elements.

3. Pivot bearing according to Claim 1 or 2, **characterized in that** the base body (2) is fabricated in one piece with its attachment sections (4, 13, 22, 26).

4. Pivot bearing according to one of the preceding claims, **characterized in that** the base body (2) is punched from the planar piece of sheet metal.

5. Pivot bearing according to one of the preceding claims, **characterized in that** the flange plate (33) has a projection (41) which is configured so as to be adapted to a second attachment section (13) of the base body (2).

6. Pivot bearing according to one of the preceding claims, **characterized in that** the flange plate (33) has bores (37) which are of hexagonal configuration, at least in certain sections.

7. Pivot bearing according to Claim 5 or 6, **characterized in that** the flange plate (33) is connected by its projection (41) in a frictionally locking fashion to the base body (2) on the one hand, and to a damper connecting element (14) on the other.

8. Pivot bearing according to one of the preceding claims, **characterized in that** the base body (2) has reinforcing ribs.

9. Pivot bearing according to one of the preceding claims, **characterized in that** the frictionally locking connection is a screw connection.

## Revendications

1. Palier pivotant pour un véhicule, comportant un corps de base (2) permettant de relier des éléments de guidage de roue à une roue, **caractérisé en ce que** le corps de base (2) est constitué d'une tôle plane, à laquelle est associée une plaque de bride (33), qui est assemblée au corps de base (2) par complémentarité de force et de forme.

2. Palier pivotant selon la revendication 1, **caractérisé en ce que** le corps de base (2) présente des parties de fixation (4, 13, 22, 26) en vue de la fixation d'éléments de guidage de roue.

3. Palier pivotant selon la revendication 1 ou 2, **caractérisé en ce que** le corps de base (2) est fabriqué d'une seule pièce avec ses parties de fixation (4, 13, 22, 26).

4. Palier pivotant selon l'une quelconque des revendications précédentes, **caractérisé en ce que** le corps de base (2) est estampé hors de la tôle plane.

5. Palier pivotant selon l'une quelconque des revendications précédentes, **caractérisé en ce que** la plaque de bride (33) présente un prolongement (41), qui est configuré de manière adaptée à une deuxième partie de fixation (13) du corps de base (2).

6. Palier pivotant selon l'une quelconque des revendications précédentes, **caractérisé en ce que** la plaque de bride (33) présente des perçages (37), qui sont au moins par parties hexagonaux.

7. Palier pivotant selon la revendication 5 ou 6, **caractérisé en ce que** la plaque de bride (33) est assemblée par son prolongement (41), par complémentarité de force et de forme, d'une part au corps de base (2) et d'autre part à une pièce de raccordement d'amortisseur (14).

8. Palier pivotant selon l'une quelconque des revendications précédentes, **caractérisé en ce que** le corps de base (2) comporte des nervures de renforcement.

9. Palier pivotant selon l'une quelconque des revendications précédentes, **caractérisé en ce que** l'assemblage par complémentarité de force et de forme est un assemblage vissé.
